# EUROPÄISCHE PATENTANMELDUNG

(11) **EP 1 256 612 A2**
(43) Veröffentlichungstag der Anmeldung: **13.11.2002**
(21) Anmeldenummer: 02008910.8
(22) Anmeldetag: 20.04.2002
(51) Int. Cl.: C09J 7/02

(54) **Klebfolienstreifen**

(30) Priorität: 12.05.2001 DE 10123291
(71) Anmelder: Tesa AG, 20253 Hamburg (DE)
(72) Erfinder: Krawinkel, Thorsten Dr., 22457 Hamburg (DE)

(57) **Zusammenfassung**

Klebefolienstreifen für eine durch dehnendes Verstrecken in der Verklebungsebene rückstandslos und zerstörungsfrei wiederlösbare Verklebung, mit einer Haftklebemasse auf Basis von Styrolblockcopolymeren, dadurch gekennzeichnet, dass die Haftklebemasse ein säure- und / oder säureanhydrid-modifiziertes Elastomer enthält.

## Beschreibung

Die Erfindung betrifft eine Haftklebemasse für ein- oder beidseitig haftklebrige Klebfolienstreifen, welche sich durch dehnendes Verstrecken in der Verklebungsebene rückstands- und zerstörungsfrei wiederablösen lassen, und bei denen weder der Untergrund noch der zu verklebenden Gegenstand beschädigt oder verfärbt wird.

Elastisch oder plastisch hochdehnbare Selbstklebebänder, welche sich durch dehnendes Verstrecken in der Verklebungsebene rückstands- und zerstörungsfrei wiederablösen lassen (nachfolgend auch als stripfähige Selbstklebebänder bezeichnet), sind aus US 4,024,312, DE 33 31 016, WO 92/11332, WO 92/11333, DE 42 22 849, WO 95/06691, DE 195 31 696, DE 196 26 870, DE 196 49 727, DE 196 49 728, DE 196 49 729, DE 197 08 366 und DE 197 20 145 bekannt.

Eingesetzt werden sie häufig in Form von ein- oder beidseitig haftklebrigen Klebfolienstreifen (Klebebandstreifen, Klebestreifen), welche bevorzugt einen nicht haftklebrigen Anfasserbereich aufweisen, von welchem aus der Ablöseprozess eingeleitet wird. Besondere Anwendungen entsprechender Selbstklebebänder finden sich u. a. in DE 42 33 872, DE 195 11 288, US 5,507,464, US 5,672,402 und WO 94/21157, spezielle Ausführungsformen sind z. B. in DE 44 28 587, DE 44 31 914, WO 97/07172, DE 196 27 400, WO 98/03601 und DE 196 49 636, DE 197 20 526, DE 197 23 177, DE 297 23 198, DE 197 26 375, DE 197 56 084, DE 197 56 816, WO 99/31193, WO 99/37729 und WO 99/63018 beschrieben.

Bevorzugte Einsatzgebiete vorgenannter stripfähiger Klebfolienstreifen beinhalten insbesondere die rückstands- und zerstörungsfrei wiederablösbare Fixierung leichter bis mittelschwerer Gegenstände im Wohn-, Arbeits- und Bürobereich. Sie ersetzen hierbei klassische Befestigungsmittel, wie z. B. Stecknadeln, Pin-Nadeln, Heftzwecken, Nägel, Schrauben, klassische Selbstklebebänder und Flüssigklebstoffe, um nur einige zu nennen. Wesentlich für den erfolgreichen Einsatz o. g. Klebfolienstreifen ist neben der Möglichkeit des rückstands- und zerstörungsfreien Wiederablösens verklebter Gegenstände deren einfache und schnelle Verklebung sowie für die vorgesehene Verklebungsdauer deren sicherer Halt. Hierbei ist insbesondere zu berücksichtigen, dass die Funktionsfähigkeit der Klebestreifen auf einer Vielzahl von Substraten gegeben sein muss, um als Universalfixierung insbesondere im Wohn-, Arbeits- und Bürobereich dienen zu können.

Obwohl in der oben zitierten Patentliteratur eine breite Palette von Haftklebemassen für die Verwendung in stripfähigen Selbstklebebändern beschrieben werden, so weisen aktuell im Markt befindliche Handelsprodukte (z. B. tesa® Powerstrips® der Beiersdorf AG, 3M Command® Adhesive Klebestreifen der Fa. 3M sowie Plastofix® Formule Force 1000 Klebestreifen der Fa. Plasto S. A.) sämtlichst Haftklebemassen auf Basis von Styrolblockcopolymeren mit im Elastomerblock ungesättigten Polydienblöcken auf. Typischerweise finden lineare oder radiale Blockcopolymere auf Basis von Polystyrolblöcken und Polybutadienblöcken und/oder Polyisoprenblöcken, also z. B. radiale Styrol-Butadien- (SB)n und/oder lineare Styrol-Butadien-Styrol- (SBS) und/oder lineare Styrol-lsopren-Styrol-Blockcopolymere (SIS) Verwendung. Vorteile vorgenannter styrolblockcopolymerbasierender Haftklebemassen für den Einsatz in stripfähigen Selbstklebebändem sind z. B. die mit Ihnen erreichbaren sehr hohen Verklebungsfestigkeiten (bedingt u. a. durch die gleichzeitige Realisierung einer sehr hohen Kohäsion und sehr hoher Klebkräfte), eine ausgeprägte Reduzierung der Haftklebrigkeit beim verstreckenden Ablösen (welches den Ablöseprozess deutlich erleichtert oder gar erst ermöglicht) sowie eine sehr hohe Zugfestigkeit, welche insbesondere für einen reißerfreien Ablöseprozess wesentlich ist.

Nachteilig ist jedoch bei Produkten des Standes der Technik eine Verfärbung des Untergrundes und / oder des verklebten Substrates, insbesondere bei längerer Verklebung. Besonders ausgeprägt können Untergrundverfärbungen in Erscheinung treten, wenn primäre Antioxidanzien auf Basis sterisch gehinderter Phenole eingesetzt werden, insbesondere wenn solche sterisch gehinderte Phenole verwendet werden, welche eine 3-(p-Hydroxyphenyl)-propionsäure Gruppe oder eine 3-(o-Hydroxyphenyl)-propionsäure Gruppe enthalten. Entsprechende Antioxidanzien werden typischerweise zur Stabilisierung von styrolblockcopolymerbasierenden Haftklebemassen bzw. zur Stabilisierung zahlreicher der in entsprechenden Haftklebemassen verwendeten Rohstoffe genutzt. Durch den Einsatz entsprechender Alterungsschutzmittel bereits in vielen der in entsprechenden Haftklebemassen genutzten Rohstoffe durch die Rohstoffhersteller, wie z. B. in zahlreichen Klebharzen oder in vielen Styrolblockcopolymeren selbst, ist die großtechnische Herstellung von Klebmassen, welche frei von entsprechenden Verbindungen sind, im allgemeinen nicht möglich. Gleichzeitig ist sie oft auch nicht erwünscht, da gerade diese Alterungsschutzmittel besonders effektive Antioxidanzien darstellen.

Beispiele für zuvor genannte primäre Antioxidanzien, welche eine 3-(p-Hydroxyphenyl)-propionsäure-Gruppe oder eine 3-(o-Hydroxyphenyl)-propionsäure-Gruppe enthalten, sind z. B. erhältlich unter den Markennamen Irganox 1010, Irganox 1035, Irganox 1076 der Firma Ciba Additive, Sumilizer BP 101 und Sumilizer BP 76 der Fa. Sumitomo und Hostanox O 10, Hostanox O 16 der Fa. Clariant, um nur einige wenige zu nennen.

### Zielsetzung

Ziel war ein ein- oder beidseitig haftklebriger Klebfolienstreifen für eine rückstands- und zerstörungsfrei wiederablösbare Verklebung, der sich durch Verstreckung im wesentlichen in der Verklebungsebene aus einer Klebfuge herauslösen lässt und weder auf dem Untergrund noch auf dem verklebten Gegenstand Verfärbungen hervorruft und auf der Basis von Styrolblockcopolymeren beruht.

### Zielerreichung

Erreicht wird dieses Ziel überraschenderweise durch die Einsetzung eines säure- und / oder säureanhydridmodifizierten Elastomers, wie es besonders auf Basis von SEBS und / oder SEPS erhältlich ist, z.B. unter dem Namen Kraton FG 1901 und Kraton FG 1924 der Firma Shell, bzw. Tuftec M der Fa. Asahi, sowie Septon KL 01M1 der Fa. Kuraray . Durch die Verwendung eines solchen Elastomers können die auftretenden Rotverfärbungen besonders von empfindlichen Untergründen wie z.B. gestrichener Raufasertapete weitestgehend unterdrückt werden.
Bei einem Ersatz von SEBS- bzw. SEPS-Elastomeren zu solchen mit Säure- bzw. Säureanhydridmodifikation bleiben die Klebeigenschaften der Klebestreifen weitestgehend gleich.

### Haftklebemassen

Als Haftklebemassen finden bevorzugt solche auf Basis von Blockcopolymeren enthaltend Polymerblöcke gebildet von Vinylaromaten (A-Blöcke), bevorzugt Styrol, und solchen gebildet durch Polymerisation von 1,3-Dienen (D-Blöcke), bevorzugt Butadien und Isopren Anwendung. Sowohl Homo- als auch Copolymerblöcke sind erfindungsgemäß nutzbar. Resultierende Blockcopolymere können gleiche oder unterschiedliche D-Blöcke enthalten, die teilweise, selektiv oder vollständig hydriert sein können. Blockcopolymere können lineare A-D-A Struktur aufweisen. Einsetzbar sind ebenfalls Blockcopolymere von radialer Gestalt sowie sternförmige und lineare Multiblockcopolymere. Als weitere Komponenten können A-D - Zweiblockcopolymere vorhanden sein. Blockcopolymere von Vinylaromaten und Isobutylen sind ebenfalls erfindungsgemäß einsetzbar. Sämtliche der vorgenannten Polymere können alleine oder im Gemisch miteinander genutzt werden.

Anstelle der Polystyrolblöcke können auch Polymerblöcke auf Basis anderer aromatenhaltiger Homo- und Copolymere (bevorzugt C-8 bis C-12 Aromaten) mit Glasübergangstemperaturen von > ca. 75°C genutzt werden, wie z.B. α-methylstyrolhaltige Aromatenblöcke. Gleichfalls sind Polymerblöcke auf Basis von (Meth)acrylathomo- und (Meth)acrylatcopolymeren mit Glasübergangstemperaturen von > +75°C nutzbar. Hierbei können sowohl Blockcopolymere zum Einsatz kommen, welche als Hartblöcke ausschließlich solche auf Basis von (Meth)acrylatpolymeren nutzen als auch solche, welche sowohl Polyaromatenblöcke, z. B. Polystyrolblöcke, als auch Poly(meth)acrylatblöcke nutzen.

Anstelle von Styrol-Butadien Blockcopolymeren und Styrol-Isopren Blockcopolymeren und deren Hydrierungsprodukten, mithin Styrol-Ethylen/Butylen Blockcopolymere und Styrol-Ethylen/Propylen Blockcopolymere, können erfindungsgemäß ebenfalls Blockcopolymere und deren Hydrierungsprodukte genutzt werden, welche weitere polydienhaltige Elastomerblöcke nutzen, wie z. B. Copolymere mehrerer unterschiedlicher 1,3-Diene.

Typische Einsatzkonzentrationen für die Styrolblockcopolymere liegen im Bereich zwischen 20 Gew.% und 70 Gew.%, bevorzugt im Bereich zwischen 30 Gew.% und 60 Gew.% besonders bevorzugt im Bereich zwischen 35 Gew.% und 55 Gew.%.

Als weitere Polymere können solche auf Basis reiner Kohlenwasserstoffe, z. B. ungesättigte Polydiene, wie natürliches oder synthetisch erzeugtes Polyisopren oder Polybutadien, chemisch im wesentlichen gesättigte Elastomere, wie z. B. gesättigte Ethylen-Propylen-Copolymere, α-Olefincopolymere, Polyisobutylen, Butylkautschuk, Ethylen-Propylenkautschuk sowie chemisch funktionalisierte Kohlenwasserstoffe, wie z. B. halogenhaltige, acrylathaltige oder vinyletherhaltige Polyolefine vorhanden sein, welche die vinylaromatenhaltigen Blockcopolymere bis zu ca. 100 phr bezogen auf das Styrolblockcopolymer ersetzen können.

Erfindungsgemäße Haftklebemassen können chemisch, insbesondere strahlenchemisch (z. B. durch UV-Bestrahlung, γ-Bestrahlung oder durch Bestrahlung mittels schneller Elektronen) vernetzt sein.

Erfindungsgemäße Klebmassen sind optional solche, deren Haftklebrigkeit erst durch thermische oder Lösemittelaktivierung erzeugt wird.

Geeignete Haftklebemassen sind neben den zuvor beschriebenen auf Basis vinylaromatenhaltiger Blockcopolymere all solche, welche über eine für den Ablöseprozess ausreichende Reißfestigkeit, Kohäsion und Dehnung verfügen. Entsprechende Haftklebemassen können allein oder in Kombination mit solchen auf Basis vinylaromatenhaltiger Blockcopolymere eingesetzt werden.

Als Klebrigmacher nutzen erfindungsgemäße Haftklebemassen als Hauptkomponente insbesondere Klebharze, die mit dem Elastomerblock der Styrolblockcopolymere verträglich sind. Bevorzugt geeignet sind u. a.: nicht hydrierte, partiell- oder vollständig hydrierte Harze auf Basis von Kolophonium und Kolophoniumderivaten, hydrierte Polymerisate des Dicyclopentadiens, nicht hydrierte, partiell, selektiv oder vollständig hydrierte Kohlenwasserstoffharze auf Basis von C-5, C-5/C-9 oder C-9 Monomerströmen, Polyterpenharze auf Basis von α-Pinen und/oder β-Pinen und/oder δ-Limonen, hydrierte Polymerisate von bevorzugt reinen C-8 und C-9 Aromaten. Vorgenannte Klebharze können sowohl allein als auch im Gemisch eingesetzt werden.

Als weitere Additive können typischerweise Lichtschutzmittel, wie z. B. UV-Absorber, sterisch gehinderte Amine, Antiozonantien, Metalldesaktivatoren, Verarbeitungshilfsmittel, endblockverstärkende Harze, eingesetzt werden.

Plastifizierungsmittel, wie z. B. Flüssigharze, Weichmacheröle oder niedermolekulare flüssige Polymere, wie z. B. niedermolekulare Polyisobutylene mit Molmassen < 1500 g/mol (Zahlenmittel), oder flüssige EPDM-Typen werden typischerweise in geringen Mengen von < ca. 20 Gew.% eingesetzt.

Füllstoffe, wie z.B. Siliziumdioxid, Glas (gemahlen oder in Form von Kugeln), Aluminiumoxide, Zinkoxide, Calciumcarbonate, Titandioxide, Ruße, um nur einige zu nennen, ebenso Farbpigmente und Farbstoffe sowie optische Aufheller können ebenfalls Verwendung finden.

### Antioxidanzien

Üblicherweise werden styrolblockcopolymerbasierenden Haftklebemassen primäre und sekundäre Antioxidanzien zugesetzt, um ihre Alterungsstabilität zu verbessern. Primäre Antioxidanzien reagieren dabei mit Oxi- und Peroxiradikalen, die sich in Gegenwart von Sauerstoff bilden können, und reagieren mit diesen zu weniger reaktiven Verbindungen. Sekundäre Antioxidanzien reduzieren z.B. Hydroperoxide zu Alkoholen. Bekanntermaßen besteht ein synergistischer Effekt zwischen primären und sekundären Alterungsschutzmitteln, so dass der Schutzeffekt einer Mischung häufig größer ist als die Summe der beiden Einzeleffekte. Standardmäßig in Haftklebemassen auf Basis von Styrolblockcopolymeren eingesetzte primäre Antioxidanzien sind sehr häufig sterisch gehinderte Phenole, welche eine 3-(p-Hydroxyphenyl)-propionsäure Gruppierung oder eine 3-(o-Hydroxyphenyl)-propionsäure Gruppe tragen, wie z.B. Irganox 1010, Irganox 1076, Irganox 259, Irganox 1035 und Irganox 1135 der Firma Ciba Additive, Sumilizer BP 101 und Sumilizer BP 76 der Fa. Sumitomo oder Hostanox O 10 und Hostanox O 16 der Fa. Clariant, Anox 20 der Firma Eni Chem Sintesis oder Lowinox PP 35 und Lowinox PO 35 der Fa. Chemische Werke Lowi um nur einige zu nennen.

Beim Einsatz von Antioxidanzien insbesondere vorgenannter Art kann es zu roten Verfärbungen des Untergrundes kommen, speziell bei z. B. Verklebung auf mit Dispersions- oder Latexfarbe gestrichener Tapete oder entsprechend gestrichenen Wänden.

Vorgenannte Verfärbungen treten bevorzugt am Rand des Klebestreifens auf, was auf die Wechselwirkung mit Luftsauerstoff schließen lässt. Es fällt auf, dass die Klebestreifen selbst nicht sichtbar verfärben, sondern lediglich der Untergrund, auf dem diese verklebt sind.

Bei sämtlichen der vorgenannten Antioxidanzien handelt es sich um Typen, die als nicht verfärbend ausgelobt werden.

Damit der Untergrund durch die Antioxidanzien oder deren Abbauprodukte rot verfärbt werden kann, müssen diese zunächst aus dem Klebestreifen in den Untergrund diffundieren. Aus diesem Grund ist verständlich, dass die Verfärbung des Untergrundes selbst stark von der Verträglichkeit der Klebemassen mit den Antioxidanzien bzw. deren Abbauprodukten und damit von der Art der eingesetzten Styrolblockcopolymere, Klebharze und sonstiger Additive abhängt.

Bei dauerhaften Verklebungen treten die genannten Verfärbungen in der Praxis häufig nicht störend in Erscheinung, da sie im Allgemeinen nicht sichtbar sind. Erst die Verwendung von wiederablösbaren Klebestreifen lässt die Verfärbungen problematisch erscheinen, wenn nach dem Ablösen mehr oder weniger stark ausgeprägte rote Ränder um die ehemalige Verklebungsfläche auftreten. Eine weitere entscheidende Einflussgröße auf die Verfärbungsneigung hat die Verklebungsdauer: je länger ein Klebestreifen mit einer Oberfläche in Kontakt steht, desto größer kann auch die Verfärbung des Untergrundes im Kontaktbereich der Verklebung sein.

Für die angenommene Reaktion mit dem Sauerstoff der Luft müssen die Antioxidanzien oder deren Folgeprodukte in die Substratoberfläche migrieren. Dieses geschieht bevorzugt, wenn die Elastomere und Harze recht unpolar sind, die typischerweise polareren Antioxidanzien damit eine geringere Löslichkeit in der Klebemasse aufweisen. Die beobachteten Verfärbungen treten jedoch nachweisbar auch im Falle von Klebmassen auf, welche polare Harze, z. B. Kolophoniumester enthalten. Da Sauerstoff bevorzugt am Rand des Klebestreifens einwirken kann, entsteht hier auch die erste sichtbare Verfärbung, die schon nach wenigen Tagen bis einigen Wochen sichtbar werden kann.

Verfärbungen treten verstärkt auf bei Anwendung der Klebestreifen auf sehr rauen Untergründen, z. B. auf von mit acrylathaltiger Dispersionsfarbe gestrichener Raufasertapete.

Durch die groben Unebenheiten der Tapetenoberfläche und die hierdurch bedingte unvollständige Verklebung kann Luftsauerstoff auch in die nicht verklebten Zwischenräume zwischen Klebestreifen und Haftgrund gelangen, so dass Verfärbungen besonders deutlich hervortreten.

Die einfachste Möglichkeit, die Rotverfärbung zu unterdrücken besteht im Verzicht auf Antioxidanzien, insbesondere auf die oben beschriebenen sterisch gehinderten Phenole, insbesondere im Verzicht auf sterisch gehinderte Phenole, welche eine 3-(p-Hydroxyphenyl)-propionsäure Gruppierung oder eine 3-(o-Hydroxyphenyl)-propionsäure Gruppe enthalten. Da entsprechende Antioxidanzien jedoch standardmäßig in einer großen Anzahl von Rohstoffen von Herstellerseite verwendet werden, ist ein entsprechender Verzicht in der Praxis zumeist nicht möglich.

Eine Möglichkeit die Rotverfärbung von empfindlichen Untergründen zu unterdrücken ist erstaunlicherweise der Einsatz von sauer reagierenden Verbindungen. Die naheliegendste Möglichkeit, eine saure Umgebung in einer Klebmasse auf Basis von Styrol-Blockcopolymeren zu erhalten, ist der Einsatz von sauren Harzen. Am besten eignen sich Kolophoniumderivate, die gar nicht oder nur teilweise verestert sind. Andererseits ist der Einsatz von Kolophoniumderivaten in hydrierten Elastomersystemen, Styrol-Ethylenbutylen-Styrol- (durch Hydrierung erhältlich aus Styrol-Butadien-Styrol-Block-Copolymeren) bzw. Styrol-Ethylenpropylen-Styrol-Block-Copolymeren (durch Hydrierung gewonnen aus Styrol-Isopren-Styrol-Block-Copolymeren) häufig nicht sinnvoll. Diese hydrierten Systeme werden eingesetzt für die Erlangung besonderer Eigenschaften, entweder hoher Transparenz und Farblosigkeit oder Stabilität gegen UV-Licht und Ozon. Nur die wenigsten Kolophoniumderivate sind farblos, so dass sie bei solch einer Zielsetzung keine Anwendung finden können. Andererseits ist die Verträglichkeit zwischen den hydrierten Elastomeren und den Kolophoniumderivaten nicht sonderlich hoch.
Zudem konnte bei Verwendung von Kolophoniumestern mit einem beträchtlichen Restgehalt an freier Säure keine wesentliche Verminderung der Rotverfärbung festgestellt werden. Die Rotfärbung setzte ebenfalls nach zwei bis drei Wochen ein, wie dieses auch bei Verwendung von Terpenharzen beobachtet werden konnte, die keine freien Säuregruppen enthalten.

Eine weitere Möglichkeit, sauer reagierende Substanzen in die Klebmasse zu bringen, ist der Einsatz von Carbonsäuren, wie z.B. p-Toluolsulfonsäure oder Stearinsäure, bzw.

Carbonsäureanhydriden. Da diese in der Klebmasse, besonders in unpolarer Umgebung, nicht sehr gut gelöst werden können, wandern die Carbonsäuren bzw. -anhydride an die Oberfläche. Allerdings ist die Wanderung von Einsatzstoffen an die Oberfläche der Klebestreifen nicht erwünscht, da dadurch die Anfassklebrigkeit und die Verklebungsleistung im Allgemeinen verlorengeht.

Auch die Einbringung von Polymeren mit Säure- bzw. -anhydridgruppen ist möglich, um die Rotverfärbung zurückzudrängen. Viele Säuregruppen enthält Polyacrylsäure, die aber durch ihre hohe Polarität nur sehr begrenzt mit den Klebmassen auf Basis von Styrolblockcopolymeren verträglich ist.
Polyolefine, die einen hohen Anteil an Maleinsäureanhydrid enthalten, können ebenfalls, wenn sie in der Masse löslich sind, eine Rotverfärbung unterdrücken.
Das Problem bei allen Zusatzstoffen zu einer Klebmasse besteht darin, dass sie nicht immer vollständig verträglich sind und an die Oberfläche wandern können. Außerdem werden von allen diesen Zusatzstoffen die mechanischen Eigenschaften und die Verklebungsleistung stark beeinflusst.

Gerade für das Funktionieren des Stripeffektes müssen die Klebmassen besondere mechanische Eigenschaften erfüllen.
Das Verhältnis der Reißkraft und der Abzugskraft soll größer als zwei, bevorzugt größer als drei sein.

Das Verhältnis von Abzugskraft und Reißkraft wird stark durch die Dicke der Klebestreifen beeinflusst. Die zum Ablösen benötigte Abzugskraft setzt sich aus der Kraft zusammen, welche für das Ablösen des Klebebandes von den Verklebungsuntergründen nötig ist und der Kraft, welche zur Verformung des Klebebandes aufgewendet werden muss. Letztere ist annähernd der Dicke des Klebebandes proportional, erstere kann im betrachteten Dickenbereich vereinfacht als konstant angenommen werden. Die Reißfestigkeit steigt auf der anderen Seite proportional zu seiner Dicke an. Hieraus folgt, dass für Selbstklebebänder entsprechend DE 33 31 016 C2 die Reißfestigkeit unterhalb einer bestimmten Dicke kleiner als die Abzugskraft wird, mithin entsprechend dünne Produkte nicht mehr durch Verstrecken in der Verklebungsebene von den Haftgründen lösbar sind, vielmehr zerreißen diese bei einem entsprechenden Versuch.

Die Abzugskraft sollte pro Klebestreifen nicht größer als 30 N sein, da ansonsten die Kraft besonders für Kinder zu groß ist. Die Abzugskraft ist stark abhängig von der Glasübergangstemperatur des gesamten Systems. Liegt die Nutztemperatur (Raumtemperatur) sehr nahe an der Glasübergangstemperatur erhöhen sich die Abzugskräfte gewaltig. Das kann dazu führen, dass die Klebestreifen sehr hart und tackfrei werden. Die Gebrauchstemperatur sollte mindestens 5°C besser 10°C über der Glasübergangstemperatur liegen.

Um Komplikationen durch Änderung der Eigenschaften bei Zugabe eines säurehaltigen Zusatzstoffes zu umgehen, sollte ein Polymer eingebaut werden, dass gut verträglich mit den anderen Komponente der Klebmasse ist und trotzdem Säure- bzw. Säureanhydridgruppen enthält.

Besonders geeignet sind hierfür Elastomere auf Basis von Styrol-Ethylenbutylen-Styrol oder Styrol-Ethylenpropylen-Styrol, die mit Säuren bzw. Säureanhydriden modifiziert sind. Elastomere dieser Art sind kommerziell erhältlich, z.B. unter dem Namen Kraton FG 1901, Kraton FG 1921 und Kraton FG 1924 der Fa. Shell, oder Tuftec M 1943, Tuftec M 1911, Tuftec M 1913, Tuftec 1962 der Fa. Asahi auf Basis von Styrol-Ethylenbutylen-Styrol bzw. Septon KL 01M1, Septon KL 02M2 der Fa. Kuraray auf Basis von Styrol-Ethylenpropylen-Styrol.

Diese Elastomere mit Säure- oder Anhydridfunktionalisierung haben zwischen 1 und 2 % Säuregruppen bezogen auf das Gesamtgewicht des Elastomers. Dabei wird häufig Maleinsäureanhydrid als Funktionalisierung eingebaut.
Die oben beschriebenen Elastomere mit Säure- oder Anhydridfunktionalisierung besitzen elastomere Analoga mit identischem Aufbau ohne Säure- bzw. Säureanhydridgruppen aber gleichem Blockpolystyrol- und Zweiblockgehalt.

Durch die Verwendung dieser sauer modifizierten Elastomere kann eine Rotfärbung des Untergrundes fast vollständig unterdrückt und auf jeden Fall weit hinausgezögert werden.
Die säure- bzw. säureanhydridmodifizierten Elastomere verhalten sich in ihren mechanischen Eigenschaften genau so, wie ihre unmodifizierten Analoga. Auch die Klebeigenschaften der fertigen Klebestreifen mit modifizierten Elastomeren sind denen mit Elastomeren ohne Säuremodifikation sehr ähnlich. Die Abzugskräfte bzw. Stripkräfte sind sehr leicht erhöht, die Reißkräfte aber gleich. Die Verklebungsleistung der Klebestreifen, die ebenfalls bei modifizierten und nicht modifizierten Elastomeren sehr ähnlich ist, wird mit Hilfe eines Schältestes und eines Wandhakentestes ermittelt.
Die säuremodifizierten Elastomere bieten einen weiteren Vorteil, durch die höhere Polarität gegenüber den nicht modifizierten Elastomeren sind sie in der Lage, die Harze und Alterungsschutzmittel besser zu lösen, so dass die Alterungsschutzmittel nicht so schnell an die Oberfläche wandern können und dort mit dem Sauerstoff der Luft reagieren können.

### Prüfmethoden:

### Bestimmung der Verfärbungsneigung

Die Klebfolienstreifen (Abmessungen: 20mm x 50 mm) werden auf eine Spanholzplatte welche mit gestrichener Raufasertapete beklebt ist (Tapete = Erfurt Körnung 52, gestrichen mit der Farbe Herbol Zenit LG) fixiert. Die Rückseite der Klebestreifen wird nicht abdeckt. Die Platten mit den verklebten Klebestreifen werden dann bei 40°C im Umlufttrockenschrank im Dunkeln gelagert. Im Abstand von jeweils einer Woche wird ein Klebestreifen durch Ziehen in Richtung der Verklebungsebene abgelöst und die Tapete nachfolgend auf Verfärbungen untersucht.

### Zugfestigkeit // maximale Dehnung

Messungen erfolgen, wenn nicht anders vermerkt, in Anlehnung an DIN 53504 mit Verwendung von Schulterstäben der Größe S3 sowie bei einer Separationsgeschwindigkeit von 300 mm/min.

### Ablösekraft (Stripkraft; Stripspannung)

Zur Ermittlung der Ablösekraft (Stripkraft) wird eine Klebstoff-Folie der Abmessungen 50 mm * 20 mm (Länge * Breite), mit am oberen Ende nicht haftklebrigem Anfasserbereich, zwischen zwei Stahlplatten (deckungsgleich zueinander angeordnet) der Abmessungen 50 mm x 30 mm, entsprechend dem unter "Kippscherfestigkeit (Kippscherstandzeit)" beschriebenen Vorgehen, jedoch mit einem Anpressdruck von jeweils 500 N, verklebt. Die Stahlplatten tragen an ihrem unteren Ende je eine Bohrung zur Aufnahme eines S-förmigen Stahlhakens. Das untere Ende des Stahlhakens trägt eine weitere Stahlplatte, über welche die Prüfanordnung zur Messung in der unteren Klemmbacke einer Zugprüfmaschine fixiert werden kann. Die Verklebungen werden 24 h bei +40°C gelagert. Nach Rekonditionierung auf RT wird der Klebfolienstreifen mit einer Zuggeschwindigkeit von 1000 mm/min parallel zur Verklebungsebene und kontaktfrei zu den Kantenbereichen der beiden Stahlplatten, herausgelöst. Dabei wird die erforderliche Ablösekraft in N gemessen. Angegeben wird der Mittelwert der Ablösespannung (in N/mm²) in dem Bereich in welchem der Klebestreifen zwischen 10 mm und 40 mm von den Stahluntergründen abgelöst ist.

### Schälfestigkeit

Zur Ermittlung der Schälfestigkeit werden die zu untersuchenden Haftklebestreifenmuster einseitig vollflächig mit einer 23 µm starken PETP-Folie (Hostaphan RN 25; Mitsubishi Chemicals) luftblasenfrei einkaschiert, danach die zweite Klebfolienstreifenseite an einem Ende mit einem ca. 6 mm langen Folienstreifen (ebenfalls Hostaphan RN 25) abgedeckt, so dass an diesem Ende ein beidseitig nicht haftklebriger Anfasserbereich entsteht. Hiernach wird der zu prüfende Klebfolienstreifen vorderseitig, mit leichtem Fingerandruck auf den Prüfuntergrund (gestrichene Raufasertapete: Tapete = Erfurt Körnung 52, Farbe = Herbol Zenit LG, Tapete verklebt auf Presspanplatte) aufgeklebt. Muster werden anschließend 10 s lang bei einem Anpressdruck von 90 N pro 10 cm² Haftklebefläche angedrückt, danach 15 Minuten bei 40°C konditioniert. Die Prüfplatten werden anschließend horizontal fixiert, so dass der anfassbare Bereich der Klebestreifen nach unten gerichtet ist. An den nicht klebenden Anfasser wird mit Hilfe einer Klemme (20 g) ein Gewicht von 50 g befestigt, so dass die entstehende Schälbelastung (ca. 0.7 N pro 20 mm Klebestreifenbreite) orthogonal zur Verklebungsebene wirkt. Nach 15 Minuten und nach 24 h wird diejenige Strecke markiert, die der Klebestreifen vom Verklebungsuntergrund seit Versuchsbeginn abgeschält ist. Der Abstand zwischen beiden Markierungen wird als Schälweg (Einheit: mm pro 24 h) angegeben.

### Kippscherfestigkeit (Kippscherstandzeit)

Zur Bestimmung der Kippscherfestigkeit wird die zu prüfende Klebstoff-Folie der Abmessung 20 mm x 50 mm, welche an einem Ende beidseitig mit einem nicht haftklebrigen Anfasserbereich versehen ist (erhalten durch Aufkaschieren von 25 µm starker biaxial verstreckter Polyesterfolie der Abmessungen 20 mm x 13 mm (Hostaphan RN 25)), mittig auf eine hochglanzpolierte quadratische Stahlplatte der Abmessung 40 mm x 40 mm x 3 mm (Länge x Breite x Dicke) verklebt. Die Stahlplatte ist rückseitig mittig mit einem 10 cm langen Stahlstift versehen, welcher vertikal auf der Plattenfläche sitzt. Die erhaltenen Probekörper werden mit einer Kraft von 100 N auf den zu prüfenden Haftgrund verklebt (Andruckzeit = 5 sec) und 5 min im unbelasteten Zustand belassen. Nach Beaufschlagung der gewählten Kippscherbelastung durch Anhängen eines Gewichtes (10 N bei 50 mm Hebelarm) wird die Zeit bis zum Versagen der Verklebung (= Kippscherstandzeit) ermittelt.

### Herstellung der Prüfkörper:

### Herstellung der Haftklebestreifen

Haftklebemassen werden in einem heizbaren Kneter mit Sigma-Schaufel (Werner & Pfleiderer LUK 1,0 K3 ausgerüstet mit einem Thermostaten LTH 303 der Fa. mgw LAUDA) bei einer Temperatur von ca. +160 bis +180°C und unter Inertisierung mit CO₂ als Schutzgas zu einer homogenen Mischung verarbeitet. Nach dem Erkalten werden durch ca. zehn-minütiges Verpressen der Klebmasse bei +120°C bis +140°C (temperierbare Presse: Typ KHL 50 der Fa. Bucher-Guyer) einschichtige Klebstoff-Folienstücke der Dicke 700µm ± 50µm (Mittelwert ± 2-fache Standardabweichung) hergestellt. Einschichtige Haftklebestreifen der gewünschten Abmessungen werden durch Ausstanzen erhalten. Im Falle der Herstellung mehrschichtiger Haftklebestreifen werden die entsprechenden Schichten zuvor durch Kaschierung (ggf. durch Heißkaschierung) erhalten und danach die Klebestreifen durch Ausstanzen vereinzelt.

| **Beispiele** | | |
|---|---|---|
| Beispiel 1 | Vector 4211 (SIS) Vector 8508 (SBS) Foralyn 110 (Kolophoniumester) | 25% 25% 50% |
| Beispiel 2 | Vector 4113 (SIS) Vector 2518 (SBS) Foralyn 110 (Kolophoniumester) | 25% 25% 50% |
| Beispiel 3 | Kraton G 1650 (SEBS) Kraton G 1657 (SEBS) Escorez 5600 (hydr. KW-harz) | 20% 30% 50% |
| Beispiel 4 | Kraton G 1650 (SEBS) Kraton FG 1924X (SEBS**) Escorez 5600 (hydr. KW-harz) | 20% 30% 50% |
| Beispiel 5 | Kraton GRP 6919 (SEBS*) Kraton G 1657 (SEBS) Escorez 5600 (hydr. KW-harz) | 35% 15% 50% |
| Beispiel 6 | Kraton GRP 6919 (SEBS*) Kraton FG 1924X (SEBS**) Escorez 5600 (hydr. KW-harz) | 35% 15% 50% |
| Beispiel 7 | Kraton GRP 6919 (SEBS*) Kraton FG 1901X (SEBS**) Kraton G 1657 (SEBS) Escorez 5600 (hydr. KW-harz) | 30% 10% 10% 50% |
| Beispiel 8 | Kraton GRP 6919 (SEBS*) Septon KL 03-M3 (SEPS**) Kraton G 1657 (SEBS) Escorez 5600 (hydr. KW-harz) | 30% 10% 10% 50% |
| Beispiel 9 | Kraton GRP 6919 (SEBS*) Kraton G 1650 (SEBS) Kraton FG 1924X (SEBS**) Escorez 5600 (hydr. KW-harz) | 30% 10% 10% 50% |

| | | |
|---|---|---|
| * enthält Polyisoprenseitenketten | | |
| ** maleinsäureanhydridmodifiziert (2%) | | |

| **Verfärbungsneigung** | |
|---|---|
| Beispielnummer | Verfärbungsneigung Verfärbung nach Wochen deutlich sichtbar |
| Beispiel 1 | 3 |
| Beispiel 2 | 2 |
| Beispiel 3 | 1 |
| Beispiel 4 | 8 |
| Beispiel 5 | 1 |
| Beispiel 6 | 9 |
| Beispiel 7 | 8 |
| Beispiel 8 | 7 |
| Beispiel 9 | 7 |

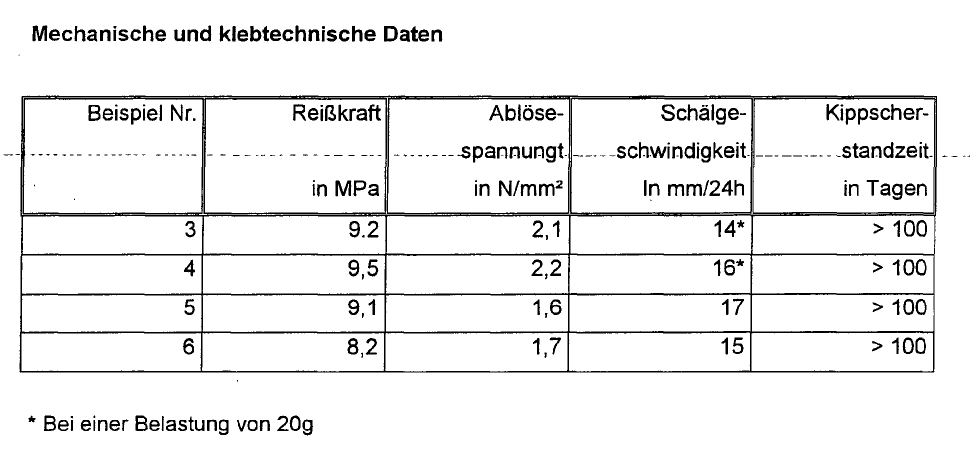

## Patentansprüche

1. Klebefolienstreifen für eine durch dehnendes Verstrecken in der Verklebungsebene rückstandslos und zerstörungsfrei wiederlösbare Verklebung, mit einer Haftklebemasse auf Basis von Styrolblockcopolymeren, **dadurch gekennzeichnet, dass** die Haftklebemasse ein säure- und / oder säureanhydrid-modifiziertes Elastomer enthält.

2. Klebfolienstreifen nach Anspruch 1, **dadurch gekennzeichnet, dass** das Elastomer ein solches auf Basis von SEBS und /oder SEPS ist.

3. Klebfolienstreifen nach Anspruch 1, **dadurch gekennzeichnet, dass** das Elastomer von 30 bis 60, insbesondere von 35 bis 55 Gew % der Haftklebemasse ausmacht.

4. Klebfolienstreifen nach Anspruch 1, **dadurch gekennzeichnet, dass** das Elastomer 1 bis 2 % Säuregruppen bezogen auf das Gesamtgewicht des Elastomers enthält, insbesondere in Form von eingebautem Maleinsäureanhydrid.

5. Klebfolienstreifen nach Anspruch 1, **dadurch gekennzeichnet, dass** die Haftklebemasse Klebrigmacher und ggf. weitere Additive, Plastifizierungs- mittel und / oder Füllstoffe enthält.

6. Klebfolienstreifen nach Anspruch 1, **dadurch gekennzeichnet, dass** er einseitig oder insbesondere beidseitig mit der Haftklebemasse ausgerüstet ist.

7. Klebfolienstreifen nach Anspruch 1, **dadurch gekennzeichnet, dass** er einen nichtklebenden Anfasser aufweist

8. Klebfolienstreifen nach Anspruch 1, **dadurch gekennzeichnet, dass** er lediglich aus der Haftklebemasse besteht (ggf. mit Anfasser), oder ein Laminat ist, insbesondere ein solches mit einem verstreckbarem Träger.

9. Verfahren zur Herstellung eines Klebfolienstreifen nach Anspruch 1 - 8, **dadurch gekennzeichnet, dass** man eine Haftklebemasse nach einen des Anspruch 1 - 8 einsetzt, ggf. auf einem verstreckbarem Träger.
